# EUROPÄISCHE PATENTSCHRIFT

(11) **EP 2 319 249 B1**
(45) Veröffentlichungstag und Bekanntmachung des Hinweises auf die Patenterteilung: **25.04.2012**
(21) Anmeldenummer: 09778300.5
(22) Anmeldetag: 26.08.2009
(51) Int. Cl.: H04Q 9/00, G01D 3/08

(54) **MESSSYSTEM UND AUSWERTEEINHEIT ZUR BESTIMMUNG UND/ODER ÜBERTRAGUNG EINES POSITIONSABHÄNGIGEN MESSWERTES MIT EINEM OFFSETWERT UND VERFAHREN HIERZU**
MEASUREMENT SYSTEM AND EVALUATION UNIT FOR DETERMINING AND/OR TRANSMITTING A POSITION-DEPENDENT MEASUREMENT VALUE WITH AN OFFSET VALUE AND METHOD THEREFOR
SYSTÈME DE MESURE ET UNITÉ D'ÉVALUATION POUR LA DÉTERMINATION ET/OU LA TRANSMISSION D'UNE VALEUR DE MESURE DÉPENDANTE DE LA POSITION AVEC UNE VALEUR DE DÉCALAGE ET PROCÉDÉ CORRESPONDANT

(30) Priorität: 26.08.2008 DE 102008039702; 26.08.2008 DE 102008039703
(43) Veröffentlichungstag der Anmeldung: 11.05.2011
(73) Patentinhaber: Baumer Hübner GmbH, 10967 Berlin (DE)
(72) Erfinder: HILLER, Bernhard, 13465 Berlin (DE); KIRCHBERGER, Roland, 10787 Berlin (DE)
(74) Vertreter: Strauss, Steffen
(86) Internationale Anmeldenummer: PCT/EP2009/006380
(87) Internationale Veröffentlichungsnummer: WO 2010/025914

(56) Entgegenhaltungen:
- GB-A- 2 255 410
- US-A1- 2005 038 623
- US-A1- 2006 136 159

## Beschreibung

Die Erfindung betrifft ein Verfahren und eine Vorrichtung zur Bestimmung und/oder Übertragung eines momentan zu erfassenden positionsabhängigen Messwertes, wie einer Lage, einer Geschwindigkeit oder einer Beschleunigung, sowie ein Verfahren zur Messwertbestimmung.

Es ist im Stand der Technik bekannt, die Bewegungsparameter der Relativbewegung zweier Körper zueinander durch Messeinrichtungen zu erfassen. So werden beispielsweise die momentane Lage, Geschwindigkeit und/oder Beschleunigung zweier geradlinig relativ zueinander bewegter Körper als zu erfassende Positionswerte mit Hilfe linearer Messsysteme erfasst. Zur Ermittlung von momentaner Lage, Geschwindigkeit und/oder Beschleunigung bei rotatorischen Relativbewegungen werden Drehgeber eingesetzt.

Unabhängig von ihrer Ausgestaltung erzeugen die Messeinrichtungen den zu erfassenden Messwert stets in Form eines Messsignals, also einer Repräsentation des Messwertes. Daher ist im Folgenden der Begriff des Messwertes gleichgesetzt mit seiner Repräsentation in Signalform. Typischerweise kodiert ein inkrementeller Drehgeber das Positionssignal oder den Positionswert in Form eines oder mehrerer Sinus- oder Rechtecksignale. Umfasst das Positionssignal mehrere sinusförmige Signale oder mehrere Rechtecksignale, so sind diese oftmals zueinander phasenverschoben.

Insbesondere Regler, wie sie üblicherweise zur Steuerung von Elektromotoren eingesetzt werden, erfordern, dass der dann als Positionswert vorliegende Messwert in Form von Rechtecksignalen kodiert ist. Die Frequenz des Rechtecksignals ist direkt proportional zur zeitlichen Änderung des momentan zu erfassenden Positionswertes. Wird keine Bewegung erfasst, so ist die Frequenz des Rechtecksignals Null. Dieser Zustand lässt sich vom Zustand eines Fehlers im Signalweg des momentan zu erfassenden positionsabhängige Messwertes und/oder im Messsystem nicht unterscheiden.

Ein Beispiel einer digitalen Übertragung eines Positionswertes ist beispielsweise in der EP 1 067 497 B1 beschrieben, gemäß der wenigstens ein Absolutwert einer laufend gemessenen physikalischen Größe sowie Korrekturwerte, die Änderungen dieses Absolutwertes beschreiben, in digitaler Form bereitgestellt und an einen Empfänger übertragen werden. Empfängerseitig werden aus den übertragenen Werten fortgeschriebene Messwerte gebildet. Diese Lösung bietet den Vorteil, dass selbst langsame Änderungen des momentan zu erfassenden Positionswertes mit hoher Auflösung übertragen werden. Allerdings erfordert die Lösung speziell ausgestaltete Empfänger.

In den Druckschriften DE 698 19 672 T2, DE 10 2006 007 184 A1, DE 10 2004 063 230 A1 (US 2006/136,159 A1), DE 101 22 868 A1, GB 2 255 410, US 2005/038,623 und DE 199 27 146 A1 sind Verfahren und Vorrichtungen beschrieben, die laufzeitbedingte Fehler korrigieren und Kontrollsignale oder Offsetsignale erzeugen und diese einem Messsignal überlagern.

Nach wie vor ist jedoch problematisch, dass bei den bekannten Systemen nicht zwischen den beiden Fällen unterschieden werden kann, dass das Messsignal Null beträgt und ein Fehler im Signalweg des Messwertes vorliegt.

Daher liegt der Erfindung die Aufgabe zugrunde, die bekannten Vorrichtungen und Verfahren dahingehend zu verbessern, dass die Funktion der Messeinrichtung kontinuierlich überprüft werden kann, ohne dass Abstriche bei der Auflösung von langsamen Änderungen des Positionswertes in Kauf genommen werden müssen.

Für das eingangs genannte Verfahren wird diese Aufgabe dadurch gelöst, dass aus einem den momentan zu erfassenden Messwert repräsentierenden Messsignal ein Übertragungssignal erzeugt wird, in dem der momentan zu erfassende Messwert eindeutig rekonstruierbar und ein vorbestimmter Offsetwert, der eine zeitliche Ableitung eines vom momentan zu erfassenden Messwert unabhängigen Messwertes repräsentiert, mit dem momentan zu erfassenden Messwert verknüpft übertragen werden.

Für die eingangs genannte Vorrichtung wird die Aufgabe erfindungsgemäß durch ein Rechenmodul, das eine Eingangsschnittstelle und eine Ausgangsschnittstelle aufweist, und ein mit der Ausgangsschnittstelle signalübertragend verbundenes Ausgabeorgan, durch das im Betrieb wenigstens ein an der Ausgangsschnittstelle anliegendes Übertragungssignal nach außerhalb der Vorrichtung ausgebbar ist, gelöst, wobei im Betrieb an der Eingangsschnittstelle ein momentan zu erfassender Messwert als Messsignal anlegbar und an der Ausgangsschnittstelle der momentan zu erfassende Messwert eindeutig rekonstruierbar mit einem vorbestimmten, eine zeitliche Ableitung eines vom momentan zu erfassenden Messwert unabhängigen Messwertes repräsentierenden Offsetwert verknüpft ist.

Bei dem Messwert kann es sich insbesondere um einen Positionswert handeln. Wie beim Messwert so wird auch der Begriff Offsetwert im Folgenden austauschbar mit dem Begriff Repräsentation des Offsetwertes verwendet.

Diese Lösung ermöglicht es, einen Messwert, z.B. einen Positionswert von Null, von einem Fehler in der elektronischen Auswertung des Messsignals zu unterscheiden, da bei einem Positionswert von Null noch immer der Offsetwert im Übertragungssignal übertragen wird, dieser Bestandteil jedoch bei einem Fehler in der Signalauswertung ebenfalls wegfällt.

Von dem Verfahren und der Vorrichtung der EP 1 067 497 B1 unterscheidet sich die erfindungsgemäße Lösung dadurch, dass kein Änderungswert des zu erfassenden Positionswertes übertragen wird, sondern ein vorbestimmter, vom jeweiligen momentan zu erfassenden Positionswert unabhängiger Offsetwert.

Die erfindungsgemäße Lösung kann durch eine Reihe von voneinander unabhängigen Weiterentwicklungen, wie sie im Folgenden beschrieben sind, verbessert werden. Die Verbesserungen betreffen in gleicher Weise das Verfahren und die Vorrichtung, auch wenn im Folgenden beispielhaft lediglich auf das Verfahren oder auf die Vorrichtung eingegangen sein sollte.

Das Messsignal und das Übertragungssignal können mehrere Spuren umfassen, auf denen zusätzliche Informationen übertragen werden. Eine Spur kann als separate Leitung oder als auf einer Leitung mit der anderen Spur überlagertes Signal ausgebildet sein.

Ein Problem bei der Kodierung des Positionswertes als Rechtecksignal liegt darin, dass eine langsame Änderung des Positionswertes im Rechtecksignal mit einer entsprechend langen Detektionszeit verbunden ist, da eine Änderung des Positionswertes nur erfasst werden kann, wenn im Rechtecksignal eine Flanke auftritt. Bei langsamen Änderungen liegen die Flanken zeitlich oft weit auseinander. Dieses Problem wird vermieden, wenn das Positionssignal als Sinussignal ausgestaltet ist. Die sich im Gegensatz zu einem Rechtecksignal über den Weg stetig ändernde Signalform des Sinussignals ermöglicht eine genauere Auflösung des Positionswertes.

Ferner kann in einer vorteilhaften Ausgestaltung die zeitliche Änderung des momentan zu erfassenden positionsabhängigen Messwertes bzw. Positionswertes im Messsignal durch eine erste Frequenz und im Übertragungssignal durch eine zweite Frequenz, die höher als die erste Frequenz ist, und der Unterschied zwischen der ersten und der zweiten Frequenz durch den vorbestimmten Offsetwert repräsentiert werden. Diese Ausgestaltung hat den Vorteil, dass langsame Änderungen des Positionswertes aufgrund der höheren Frequenz im Übertragungssignal zeitlich hochaufgelöst übertragen werden. Dies ist insbesondere dann von Vorteil, wenn das Übertragungssignal, wie dies in einer weiteren Ausführung vorgesehen sein kann, als Rechtecksignal ausgegeben wird, um empfängerseitigen Anforderungen an das Übertragungssignal zu genügen. Gerade bei Rechtecksignalen ist nämlich problematisch, dass langsame Änderungen bei niedriger Signalfrequenz eine lange Auswertezeit benötigen. Bei dieser Ausgestaltung kann mit der erhöhten Signalfrequenz im Übertragungssignal die mögliche hohe Auflösung des Positionswertes im Positionssignal ausgeschöpft werden.

Um eine einfache Rekonstruktion des momentan zu erfassenden positionsabhängige Messwertes auf Seiten eines Empfängers des Übertragungssignals zu ermöglichen, kann eine Spur des Übertragungssignals den vorbestimmten Offsetwert repräsentieren.

Empfängerseitig kann der momentan zu erfassende positionsabhängige Messwert auf einfache Weise aus dem Übertragungssignal rekonstruiert werden, wenn das Übertragungssignal wenigstens zwei Spuren enthält, in denen jeweils der momentan zu erfassende Messwert und der vorbestimmte Offsetwert miteinander verknüpft übertragen werden, wobei in der einen Spur der momentan zu erfassende positionsabhängige Messwert mit einer gegenüber der anderen Spur umgekehrten Funktion mit dem vorbestimmten Offsetwert verknüpft übertragen wird. Empfängerseitig müssen bei dieser Ausgestaltung die beiden Spuren des Übertragungssignals miteinander lediglich verknüpft werden, um den vorbestimmten Offsetwert zu eliminieren. Empfängerseitig müssen somit keine Informationen über den Offsetwert vorhanden sein.

Das Verfahren kann insbesondere von einem Drehgeber ausgeführt werden, der ein Positionssignal mittels einer integrierten Messeinrichtung erzeugt. Die Notwendigkeit separater Geräte entfällt somit bei dieser Ausführungsform.

Wird das Verfahren in einer für sich ebenfalls eine Erfindung darstellenden Abwandlung bei einem Absolutwertgeber verwendet, kann jedem der absoluten Messwerte, insbesondere jedem der absoluten Positionswerte, direkt eine Frequenz zugewiesen werden. Diese Zuweisung kann durch eine Tabelle oder eine mathematische Funktion erfolgen. Im Übertragungssignal ist der Absolutwert als Frequenz enthalten. Die zeitliche Ableitung des Messwertes kann in diesem Beispiel entfallen.

Bei dem Verfahren zur Bestimmung und/oder Übertragung eines momentan zu erfassenden positionsabhängigen Messwertes, wie einer Geschwindigkeit oder einer Beschleunigung, kann in einer weiteren Abwandlung aus einem den momentan zu erfassenden positionsabhängigen Messwert repräsentierenden Messsignal ein Übertragungssignal erzeugt werden, indem der momentan zu erfassende positionsabhängige Messwert eindeutig rekonstruierbar und ein vorbestimmter Offsetwert mit dem momentan zu erfassenden positionsabhängigen Messwert verknüpft übertragen werden.

Dieses Verfahren kann dahingehend verallgemeinert werden, dass dem momentan zu erfassenden positionsabhängigen Messwert eine Frequenz eindeutig zugewiesen und diese Frequenz übertragen wird. Die Frequenz wird durch einen vom Ergebnis der Umwandlung des Messwertes in eine Frequenz gesteuerten Frequenzgenerator erzeugt.

Zum Beispiel kann die Frequenz des Übertragungssignals über eine arithmetische Funktion vom Messwert abhängen. Vorteilhaft weil weniger rechenintensiv ist, wenn die Frequenzen über eine Look-up Tabelle mit den Messwerten verknüpft werden.

Auch direkt eine zeitliche Änderung repräsentierende Messwerte, beispielsweise eine Geschwindigkeit eines Tachogenerators, kann in Frequenzen gewandelt im Übertragungssignal übertragen werden. Hierzu wird das meist analoge Tachosignal zunächst digitalisiert und anschließend einer Frequenz zugeordnet, die dann von einem Frequenzgenerator erzeugt wird.

Eine weitere für sich erfinderische Ausgestaltung betrifft einen Tachoemulator, bei dem die Funktion eines Tachogenerators durch einen digitalen Drehgeber emuliert wird. Dies ist mit dem erfindungsgemäßen Verfahren möglich, da die Geschwindigkeit als zeitliche Ableitung des Messwertes berechnet wird. Lediglich von der Vorrichtung zur Auswertung muss im Unterschied zu den vorangehenden Ausgestaltungen ein analoges Geschwindigkeitssignal als Steuersignal ausgegeben werden. Hierzu kann aus dem Übertragungssignal direkt die zeitliche Ableitung nach der Trennung vom Offsetwert analog gewandelt ausgegeben werden.

Die Erfindung betrifft auch ein empfängerseitig durchgeführtes Verfahren zur Messwertbestimmung mit Hilfe des wie oben erzeugten Übertragungssignals. Empfängerseitig wird der momentan zu erfassende Messwert aus dem Übertragungssignal rekonstruiert, indem der zu erfassende Messwert vom vorbestimmten Offsetwert getrennt wird. Der Messwert wird dann für weitere Aufgaben, wie der Steuerung eines Elektromotors oder einer Datenauswertung, ausgegeben.

Zur Trennung vom momentan zu erfassenden Messwert und vorbestimmten Offsetwert kann beispielsweise die in einer separaten Spur des Übertragungssignals enthaltene Information über den Offsetwert genutzt werden.

Alternativ oder zusätzlich kann der momentan zu erfassende Messwert auch durch die Verknüpfung zweier Spuren des Übertragungssignals ermittelt werden, in denen der momentan zu erfassende Messwert und der vorbestimmte Offsetwert jeweils mit zueinander umgekehrten Funktionen miteinander verknüpft sind.

Das Übertragungssignal kann insbesondere eine arithmetische Verknüpfung des vorbestimmten Offsetwertes und einer zeitlichen Ableitung des momentan zu ermittelnden positionsabhängigen Messwertes repräsentieren. Eine arithmetische Verknüpfung kann insbesondere eine multiplikative oder additive Verknüpfung sein. Insbesondere die additive Verknüpfung, wie Addition oder Subtraktion, hat den Vorteil, dass die absoluten Ergebnisse der Verknüpfung nicht zu groß werden, was entsprechend lange Digitalwörter zu ihrer Darstellung erfordert, und zudem als Ganzzahlen vorliegen. Dies ist bei einer multiplikativen Verknüpfung, wie einer Division oder Multiplikation einschließlich einer Exponentialfunktion, schwerer sicherzustellen. Die Verwendung einer additiven Verknüpfung hat den besonderen Vorteil, dass bestehende Regler additive Operationen durchführen können. Folglich sind empfängerseitig keine speziellen Geräte notwendig, um einen momentan zu erfassenden Messwert im Übertragungssignal auszuwerten.

Neben einer arithmetischen Verknüpfung sind auch andere Verknüpfungen möglich, wobei zur rechnerisch einfachen Rekonstruktion des momentan zu erfassenden positionsabhängigen Messwertes es von Vorteil ist, wenn die Verknüpfungsfunktion eineindeutig umkehrbar und mit ihrer Umkehrfunktion kommutativ ist. Da der vorbestimmte Offsetwert eine zeitliche Ableitung des Messwertes darstellt, erleichtert sich die Rekonstruktion ferner, wenn die Verknüpfungsfunktion und ihre Umkehrfunktion kommutativ bezüglich Integration und Differenziation sind.

Die Verknüpfung kann auf digitalem Wege erfolgen, um einfache elektronische Bauelemente verwenden zu können. Außerdem kann der vorbestimmte Offsetwert änderbar sein, beispielsweise durch eine Programmierung der verwendeten elektronischen Bauelemente. Dies erlaubt eine Anpassung des vorbestimmten Offsetwertes und damit des Übertragungssignals an unterschiedliche Anwendungen.

Die Verknüpfung kann insbesondere dadurch erfolgen, dass beispielsweise fortlaufend ein Wert des momentan zu erfassenden Messwertes in digitaler Form berechnet und die Verknüpfungsfunktion auf diesen berechneten Wert angewandt wird. So kann der vorbestimmte Offsetwert bei einer arithmetischen Verknüpfung im Übertragungssignal mit dem berechneten Wert des momentan zu erfassenden Messwertes multipliziert, zu diesem addiert oder von diesem subtrahiert werden.

Mit dem Ergebnis der Verknüpfung kann in einer weiteren vorteilhaften Ausgestaltung ein Generator zur Erzeugung des Übertragungssignals gesteuert werden, indem beispielsweise in Abhängigkeit von dem sich aus der Verknüpfung ergebenden Wert die Frequenz eines Rechtecksignals eingestellt wird.

Die Frequenz des Übertragungssignals kann abhängig von der zeitlichen Änderung des momentan zu erfassenden positionsabhängigen Messwertes sein, was im Falle einer Positionswerterfassung eine einfache Auswertung des Übertragungssignals ermöglicht.

Mit Hilfe des Übertragungssignals kann ferner die Funktion einer das Messsignal erzeugenden Messeinrichtung überwacht werden. Fehlt nämlich das Offsetsignal im Übertragungssignal, so deutet dies auf einen Fehler in den Bauelementen hin. Bei einem positionsabhängigen Messwert von Null, wenn beispielsweise keine Bewegung der zu überwachenden Körper vorliegt, dann ist immer noch der Offsetwert im Übertragungssignal enthalten, so dass die Nullbewegung von einer Fehlfunktion unterschieden werden kann.

Eine empfängerseitige Vorrichtung zur Auswertung eines wie oben erzeugten Übertragungssignals kann erfindungsgemäß einen Signaleingang, einen Signalausgang und ein im Signalwert zwischen Signaleingang und Signalausgang angeordnetes Auswertemodul aufweisen, wobei im Betrieb am Signaleingang ein Übertragungssignal anlegbar ist, in dem ein momentan zu erfassender Messwert eindeutig rekonstruierbar mit einem vorbestimmten, eine zeitliche Ableitung eines vom momentan zu erfassenden Messwert unabhängigen Ableitung Messwertes repräsentierenden Offsetwert verknüpft ist, und am Signalausgang der momentan zu erfassende Messwert vom vorbestimmten Offsetwert getrennt ausgebbar ist.

In einer weiteren Ausgestaltung können aus dem positionsabhängigen Messwert zwei zueinander um beispielsweise 90° phasenverschobene Messwerte, also eine Sinusspur und die Cosinusspur erzeugt und mit derselben Verknüpfung mit dem Offsetwert verknüpft wer den. Werden nun diese beiden zueinander phasenverschobenen Übertragungssignale direkt an die Vorrichtung zur Auswertung übertragen, so kann dort der Messwert bei Kenntnis des Offsetwertes rekonstruiert werden, wobei die Phasenverschiebung der Messsignale erhalten geblieben sind. Der in die beiden phasenverschobenen Spuren aufgeteilte Messwert kann insbesondere eine Geschwindigkeit darstellen.

Bei dieser Ausgestaltung ist es möglich, die Spuren direkt als Steuersignal einem herkömmlichen Regler zuzuführen, da diese Regler oftmals zumindest einfache arithmetische Operationen durchführen können. Durch die erhaltene Phasenbeziehung ist im Standardregler nicht nur der Messwert, sondern auch dessen Richtung rekonstruierbar.

Im Folgenden ist die Erfindung anhand von beispielhaften Ausführungsformen näher erläutert. Die bei den einzelnen Ausführungsformen unterschiedlichen Merkmale können, wie aus den obigen Ausführungen hervorgeht, beliebig miteinander kombiniert werden, ohne dass bei einer derartigen Kombination zwingend die übrigen Merkmale der jeweiligen Ausführungsform ebenfalls vorhanden sein müssen.

Es zeigen:
- Fig. 1: eine schematische Darstellung einer erfindungsgemäßen Vorrichtung;
- Fig. 2: eine schematische Darstellung des Ablaufes des erfindungsgemäßen Verfahrens sowie einer Vorrichtung zur Durchführung des Verfahrens;
- Fig.3: eine schematische Darstellung eines weiteren Ausführungsbeispiels der Erfindung.

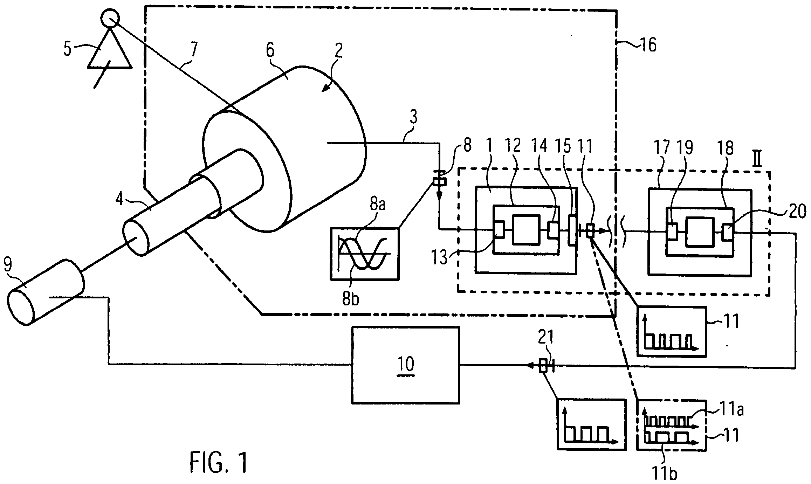

Zunächst wird die Erfindung anhand der Figur 1 beschrieben. Figur 1 zeigt eine Vorrichtung 1 zur Bestimmung und/oder Übertragung eines momentan zu erfassenden Messwertes, wie einer Lage, einer Geschwindigkeit und/oder einer Beschleunigung. Der Messwert wird von einer Messeinrichtung 2 gemessen und über eine Signalstrecke 3 an die Vorrichtung 1 übertragen.

Die Messeinrichtung 2 erfasst die Relativbewegung zweier zueinander bewegter Körper in Form eines Bewegungsparameters, wie z.B. dem Positionswert. Zur Erfassung einer rotatorischen Relativbewegung wird als Messeinrichtung beispielsweise ein Drehgeber 2 verwendet, wie er in Figur 1 exemplarisch dargestellt ist. Der Drehgeber 2 erfasst die Relativbewegung einer Welle 4 gegenüber einem ortsfesten Bezugspunkt 5, mit dem ein Teil der Messeinrichtung 2, beispielsweise das Gehäuse 6, über eine Momentenstütze 7 verbunden ist. Soll anstelle einer rotatorischen Relativbewegung eine translatorische Relativbewegung erfasst werden, so kann als Messeinrichtung 2 ein Linearsystem verwendet werden.

Die Signalstrecke 3 zwischen der Messeinrichtung 2 und der Vorrichtung 1 kann in Form einer elektrischen Leitung oder als drahtlose Signalstrecke aufgebaut sein.

Die Messeinrichtung 2 erzeugt in Abhängigkeit vom momentan gemessenen bzw. zu erfassenden Positionswert ein Messsignal 8. Das Messsignal 8 kann als Analogsignal, z.B. mit einer vom Messwert abhängigen elektrischen Spannung, Sinussignal oder Rechtecksignal ausgestaltet sein, das zur Richtungsauflösung das Vorzeichen wechselt oder auch zwei Spuren in Form zweier phasenversetzter Signale, beispielsweise in Form einer Spur 8a und einer Spur 8b, umfassen kann. In Figur 1 ist das Messsignal 8 ein Sinussignal mit einer Sinusspur und einer Cosinusspur.

Das positionsabhängige Messsignal 8 repräsentiert den momentan zu erfassenden Positionswert und dient beispielsweise dazu, einen die Welle 4 antreibenden Elektromotor 9 über einen Regler 10 zu steuern. Die Vorrichtung 1 befindet sich hierzu im Signalweg zwischen der Messeinrichtung 2 und dem Regler 10. Sie verarbeitet das Messsignal 8 und erzeugt daraus ein Übertragungssignal 11, das, wie in Figur 1 gezeigt, vorzugsweise ein Rechtecksignal ist. Die Frequenz des Übertragungssignals 11 kann insbesondere größer sein als die Frequenz des Messsignals 8.

Die Verarbeitung des positionsabhängigen Messsignals 8 zum Übertragungssignal 11 findet in einem Rechenmodul 12 statt. Das Rechenmodul 12 ist Teil der Vorrichtung 1 und kann insbesondere ein digitaler Baustein oder eine digitale Schaltungsanordnung mit einer Eingangsschnittstelle 13 und einer Ausgangsschnittstelle 14 sein. Die Ausgangsschnittstelle ist signalübertragend mit einem Ausgabeorgan 15 verbunden, an dem das Übertragungssignal 11 abgegriffen werden kann.

Wie durch die doppelt strichpunktierte Linie in der Figur 1 angedeutet ist, können die Messeinrichtung 2, die Signalstrecke 3 und die Vorrichtung 1 auch in einem Positions-, Geschwindigkeits- oder Beschleunigungsmesssystem 16 vorzugsweise einstückig handhabbar innerhalb einer einteiligen Gerätestruktur integriert sein.

Im Signalweg zwischen der Messeinrichtung 2 und dem Regler 10 kann eine ebenfalls zur Erfindung gehörende Vorrichtung 17 angeordnet sein, die der Auswertung bzw. Konvertierung des Übertragungssignals 11 dient. Die Vorrichtung 17 weist ein Auswertemodul 18 mit einem Signaleingang 19 und einem Signalausgang 20 auf. Am Signaleingang 19 kann im Betrieb das Übertragungssignal 11 angelegt werden. Am Signalausgang 20 wird aus dem Übertragungssignal 11 automatisch ein für den handelsüblichen Regler 10 geeignetes Istwertsignal 21 berechnet, das vorzugsweise ebenfalls ein Rechtecksignal ist, aber auch ein analoges, sinusförmiges oder digitales Signal zum Anschluss an eine Busschnittstelle des Reglers sein kann.

Wie in Figur 1 durch doppelt strichpunktierte Linien ebenfalls schematisch angedeutet ist, kann das Übertragungssignal 11 mehr als eine Spur enthalten. Die einzelnen Spuren des Übertragungssignals 11 sind mit den Bezugszeichen 11a, 11 b etc. versehen. Auf ein separates Bezugszeichen wird verzichtet, wenn das Übertragungssignal 11 lediglich eine einzige Spur enthält.

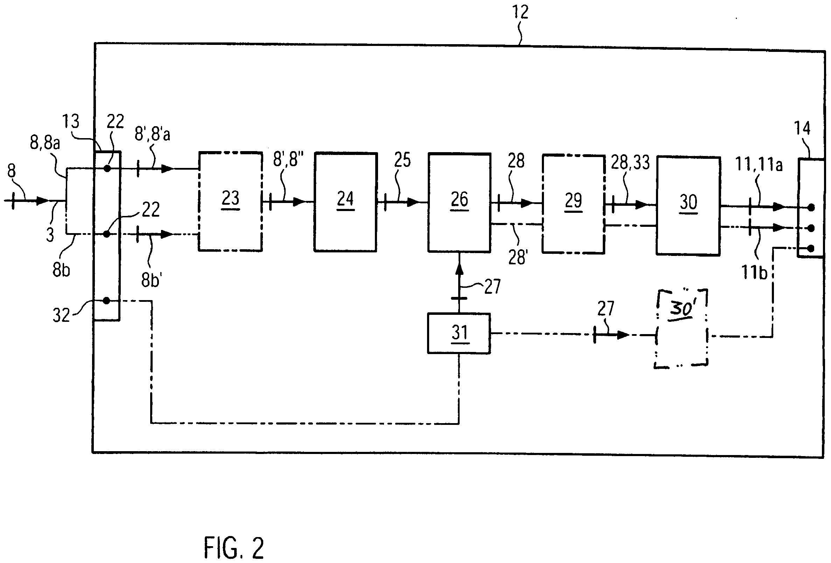

Im Folgenden wird das in den Vorrichtungen 1 und 17 durchgeführte Verfahren mit Bezug auf dem in der Figur 2 gezeigten Aufbau dieser Vorrichtungen genauer beschrieben.

Figur 2 zeigt den schematischen Aufbau eines Rechenmoduls 12, wie es in der Figur 1 dargestellt ist. Für Elemente, die hinsichtlich Funktion und/oder Aufbau den in Figur 1 beschriebenen Elementen entsprechen, werden im Folgenden die gleichen Bezugszeichen verwendet. Optionale Ausgestaltungen sind in Figur 2 in doppelt strichpunktierten Linien dargestellt.

Über die Signalstrecke 3 wird das einen positionsabhängigen Messwert repräsentierende positionsabhängige Messsignal 8 an die Eingangsschnittstelle 13 geleitet. Die Eingangsschnittstelle 13 kann beispielsweise wenigstens einen A/D-Wandler 22 aufweisen, insbesondere wenn als positionsabhängigen Messsignal 8 ein Sinus- oder Analogsignal verwendet wird. Vorzugsweise ist für jede Spur 8a, 8b im Messsignal 8 ein eigener A/D-Wandler 22 vorgesehen, der in einem vorbestimmten Wandlungstakt das analoge Messsignal 8 in ein digitales Messsignal 8' wandelt.

Weist das positionsabhängige Messsignal 8 mehrere Signalspuren auf, so wird jede Signalspur 8a, 8b synchron gewandelt. Beispielsweise wird eine Sinusspur 8a eines Sinussignals in eine digitalisierte Sinusspur 8a' und eine Cosinusspur 8b eines Sinussignals in eine digitale Cosinusspur 8b' umgewandelt. Sollte im Messsignal 8 bereits der momentan zu erfassende Messwert digital kodiert sein, kann auf A/D-Wandler selbstverständlich auch verzichtet werden.

Auf die A/D-Wandler 22 kann ebenso verzichtet werden, wenn als Messsignal 8 ein Rechtecksignal verwendet wird.

Ist das Messsignal 8 ein Inkrementalsignal, so kann ein Positionsmodul 23 im Rechenmodul 12 vorgesehen sein, welches aus dem digitalisierten Messsignal 8' bzw. dessen digitalisierten Spuren 8a' und 8b' ein Auswertesignal 8" berechnet. Im Positionsmodul 23 kann beispielsweise zur Berechnung des Auswertesignals 8" aus einem Sinussignal der Cordic-Algorithmus implementiert sein. Das Auswertesignal 8" kann als digitale Bitfolge z. B. in einem Register vorliegen. Bei der Verwendung eines Rechtecksignals als Messsignal 8 kann der Positionswert über eine Flankendetektion ermittelt werden.

Repräsentiert dagegen das digitale Messsignal 8' bereits einen absoluten Positionswert, so ist ein Positionsmodul 23 nicht erforderlich, wie an den doppelt strichpunktierten Linien in Figur 2 zu erkennen ist. In diesem gezielten Fall stellt das Positionssignal 8' bereits das Auswertesignal 8" dar. Der absolute Positionswert kann einem Frequenzgenerator zugeleitet werden, an dessen Signalausgang im Betrieb ein Signal mit einer vom absoluten Positionswert abhängenden Frequenz anliegt. Jedem der absoluten Positionswerte kann eine eigene Frequenz zugeordnet werden. Z.B. können die Frequenz und der absolute Positionswert über eine arithmetische Verknüpfung oder eine Tabelle, beispielsweise eine sogenannte Look-up Tabelle eindeutig und unmittelbar miteinander verknüpft sein.

Das digitale Positionssignal 8' oder das Auswertesignal 8" wird anschließend einem Differenzierglied 24 zugeführt, das vorzugsweise digital ein die zeitliche Ableitung des momentan zu erfassenden Positionswertes repräsentierendes Differenzialsignal 25 berechnet. Das Differenzialsignal 25 kann in Form eines Digitalwertes vorliegen.

Liegt das Messsignal als positionsabhängige Geschwindigkeits- oder Beschleunigungssignal vor, so kann nach der A/D-Wandlung 22 auf die Differentiation 24 verzichtet werden und das digitale Messsignal 8' kann direkt als Differenzialsignal 25 verwendet werden.

Das Differenzialsignal 25 wird einem Verknüpfungsorgan 26, das eine weitere funktionelle und/oder strukturelle Einheit des Rechenmoduls 12 ist, zugeführt, in dem das Differenzialsignal 25 mit einem Offsetsignal 27 verknüpft wird. Das Offsetsignal 27 kann in Form eines digital kodierten Offsetwertes vorliegen. Die Verknüpfung erfolgt dabei über eine eineindeutig umkehrbare und bezüglich einer zeitlichen Ableitung oder Integration vorzugsweise unveränderlichen und kommutierbaren Verknüpfungsfunktion, beispielsweise einer arithmetischen Verknüpfung wie Multiplikation oder Addition. So können bei einer additiven Verknüpfung die zeitliche Ableitung des momentan zu erfassenden Messwertes und der vorbestimmte Offsetwert einfach miteinander addiert werden.

Der Offsetwert selbst stellt eine zeitliche Ableitung des im positionsabhängigen Messsignal 8 kodierten positionsabhängigen Messwertes von vorbestimmter Größe dar. Der Offsetwert ist dabei unabhängig vom momentan zu erfassenden Messwert, wie er vom Messsignal 8 repräsentiert wird. Der Offsetwert wird über einen Offsetgenerator 31, z. B. durch Abruf aus einem Speicher, erzeugt und kann beispielsweise über einen Anschluss 32 der Eingangsschnittstelle 13 durch Eingriff von außen verändert werden.

Das Verknüpfungsorgan 26 erzeugt aus dem Differenzialsignal 25 und dem Offsetsignal 27 ein Zwischensignal 28, das einem Signalgenerator 30 zugeführt sein kann.

Aus dem Zwischensignal 28 kann der Signalgenerator 30 in einer Ausführungsform direkt ein an der Ausgangsschnittstelle 14 bereitgestelltes Übertragungssignal 11 erzeugen. Dies kann beispielsweise über einen PLL-Synthesizer erfolgen, dessen Frequenz in Abhängigkeit vom Ergebnis der Verknüpfung automatisch eingestellt wird.

Alternativ kann das Differenzialsignal 25 in einem zwischen Signalgenerator 30 und Verknüpfungsorgan 26 zwischengeschalteten Integrator 29 über die Zeit aufintegriert und vom Signalgenerator 30 dann in Abhängigkeit von einem solchermaßen erzeugten Integrationssignal das Übertragungssignal 11 erzeugt werden.

Die Frequenz des Übertragungssignals 11, das, wie oben bei Figur 1 erläutert, vorzugsweise ein Rechtecksignal ist, hängt von dem momentan zu erfassenden Messwert, wie er im Messsignal 8 kodiert ist, und dem Offsetwert ab.

Das Offsetsignal 27 kann ebenfalls an der Ausgangsschnittstelle 14 zur Verfügung gestellt werden, wie Figur 2 zeigt. Für die Übertragung des Offsetwertes kann dieser ebenfalls als rechteckförmiges Signal mittels eines weiteren Signalgenerators 30' aufbereitet werden. Dadurch wird es im Regler 10 möglich, den Offsetwert mit einem Frequenzzählereingang zu ermitteln.

In einer weiteren, in Figur 2 ebenfalls dargestellten Ausgestaltung kann das Übertragungssignal 11 mehr als eine Spur aufweisen oder aus dem positionsabhängigen Messsignal 8 oder dem Zwischensignal 28 eine Spur erzeugt werden. Bei einer solchen Ausgestaltung finden im Verknüpfungsorgan 26 eine erste Verknüpfung des Messwertes, wie er im Messsignal 8 und damit auch im Differenzialsignal 25 repräsentiert ist, mit dem Offsetwert und eine zweite, zur ersten Verknüpfung umgekehrte Verknüpfung von dem Messwert und dem Offsetwert statt. Das Ergebnis der zweiten Verknüpfung wird wie das Zwischensignal 28 im Rechenmodul 12 weiter verarbeitet und stellt eine weitere Spur 28' des Zwischensignals 28 dar, die analog dem Zwischensignal 28 verarbeitet und als weitere Spur 11b des Übertragungssignals 11 an der Eingangsschnittstelle ausgegeben wird. Eine zweite Spur 11 b kann um ±90° phasenverschoben zur Spur 11 generiert werden, wobei das Vorzeichen der Phasenverschiebung dem der Drehrichtung bzw. Verfahrgeschwindigkeit der Messeinrichtung 2 entspricht.

Im Folgenden sind die in Figur 2 schematisch dargestellten Verknüpfungen beispielhaft näher erläutert.

Das Messsignal 8 kodiert einen momentan zu erfassenden Messwert POS, der gegebenenfalls vom Positionsmodul 23 als Digitalwert berechnet und vom Differenzierglied 24 zeitlich abgeleitet wird, so dass das Differenzialsignal 25 die zeitliche Ableitung des momentan zu erfassenden Positionswertes, dPOS/dt, repräsentiert.

Der Offsetwert OFF ist ein vorbestimmter Wert, beispielsweise eine veränderlich festlegbare Konstante, die eine zeitliche Änderung desselben Typs des positionsabhängigen Messwertes repräsentiert, wie er im Messsignal 8 codiert ist. Stellt der Messwert POS beispielsweise eine Lage dar, so repräsentiert OFF folglich eine Geschwindigkeit; ist POS eine Geschwindigkeit, so bleibt OFF vorzugsweise eine Geschwindigkeit; ist POS eine Beschleunigung, so bleibt OFF vorzugsweise eine Beschleunigung.

Im Verknüpfungsorgan werden die Repräsentationen des momentan zu erfassenden positionsabhängigen Messwertes und des Offsetwertes verknüpft. Gemäß Figur 2 erfolgt diese Verknüpfung in der Form dPOS/dt ⊕ OFF, wobei das Symbol ⊕ eine eineindeutig umkehrbare und mit Differenziation und Integration vertauschbare Verknüpfung darstellt. Das Übertragungssignal 11 überträgt die Repräsentation dieses Verknüpfungsergebnisses.

Mit Hilfe einer weiteren Spur 11b des Übertragungssignals 11 kann die Verknüpfung des momentan zu erfassenden Messwertes POS mit dem Offsetwert OFF entsprechend einer Umkehrfunktion zu der Verknüpfung, die zur Erzeugung der ersten Spur 11a verwendet wird, erfolgen. In der zweiten Spur 11 b wird somit eine Repräsentation von dPOS/dt ⊖ OFF übertragen, wobei die Funktion ⊖ die Umkehrfunktion zur Funktion ⊕ darstellt.

Wird als Verknüpfung ⊕, ⊖ eine additive Verknüpfung, also eine Addition als die eine Funktion und eine Subtraktion als die andere Umkehrfunktion der Verknüpfung, verwendet und wird als momentan zu erfassender Messwert POS eine Lage übermittelt, so entspricht das obige Verfahren der Addition bzw. Subtraktion einer Offsetgeschwindigkeit zur zeitlichen Ableitung des momentanen Lagewertes, also der Momentangeschwindigkeit. Entsprechendes gilt, wenn als momentan zu erfassender Messwert POS eine Geschwindigkeit oder eine Beschleunigung übertragen werden.

Aufgrund der Berechnung des digitalen Messsignals 8' bzw. des Auswertesignals 8" aus einem hoch aufgelösten Messsignal 8 in Form insbesondere eines Sinussignals erfolgt die digitale Verknüpfung und Erzeugung des Übertragungssignals 11 ebenfalls mit hoher Auflösung des momentan zu erfassenden Messwertes. Da der Offsetwert OFF eine vorbestimmte zeitliche Änderung des Messwertes darstellt, bewirkt die im Verknüpfungsorgan 26 durchgeführte Verknüpfung, dass eine zeitlich langsame Veränderung des Messwertes POS im Messsignal 8 zeitlich hochaufgelöst im Übertragungssignal 11 enthalten ist, wenn beispielsweise als Verknüpfung eine Addition oder Multiplikation verwendet wird: Der langsamen Änderung von POS wird die vorbestimmte Änderung OFF zu jedem Zeitpunkt hinzuaddiert. Der Empfänger des Übertragungssignals 11 kann damit den Messwert POS innerhalb kürzerer Zeit bestimmen, als dies bei der herkömmlichen unmittelbaren Umwandlung des Messsignals 8 in ein Rechtecksignal der Fall ist.

Die Vorrichtung 17 wertet das Übertragungssignal 11 aus, indem die Verknüpfung der Repräsentation des Messwertes POS mit der Repräsentation des Offsetwertes OFF gelöst und ein Istwertsignal 21 erzeugt wird, in dem nur die Repräsentation des Messwertes POS, nicht aber die Repräsentation des Offsetwertes OFF enthalten ist. Das Istwertsignal 21 wird am Signalausgang 20 in der für den Regler 10 geeigneten Form zur Verfügung gestellt.

Gemäß einer Ausführungsform erfolgt dies, indem eine Repräsentation des Offsetwertes OFF in einer Spur des Übertragungssignals 11 an die Vorrichtung 17 übertragen wird. In dem Auswertemodul 18 der Vorrichtung 17 werden dann diese Repräsentation des Offsetsignals und die Verknüpfung von Messwert POS und Offsetwert OFF im Übertragungssignal mit einer Funktion verknüpft, die der Umkehrfunktion der im Übertragungssignal 11 implementierten Verknüpfung entspricht. In der oben angegebenen Notation führt die Vorrichtung 17 also beispielsweise die Funktion (dPOS/dt ⊕ OFF) ⊖ OFF = dPOS/dt aus. Wird ein Integrator 30 im Rechenmodul 12 verwendet, so kann der zeitlich integrierte Offsetwert mit dem Übertragungssignal 11 verknüpft oder aber zunächst das Übertragungssignal zeitlich differenziert werden. In diesem Fall erhält man: (POS ⊕ ∫ OFF) ⊖ ∫ OFF = POS. Wird ein Geschwindigkeits- oder Beschleunigungssignal als Messwert 8 übertragen, so kann dieser auch direkt mit einem Offsetwert verknüpft werden. In diesem Fall erhält man die Funktion (POS ⊕ OFF) ⊖ OFF = POS.

Alternativ zu einer Übertragung einer Repräsentation des Offsetwertes OFF zwischen der Vorrichtung 1 und der Vorrichtung 17 kann der Offsetwert OFF auch in der Vorrichtung 17 abgespeichert werden.

Eine besonders einfache und genaue Berechnung des Istwertsignals 21, die auf Seiten der Vorrichtung 17 keine Kenntnis über den Offsetwert OFF benötigt, ergibt sich, wenn das Übertragungssignal zwei Spuren aufweist, in denen eine Verknüpfung mit jeweils der Umkehrfunktion der anderen Spur vom Messwert POS und Offsetwert OFF übertragen wird. Im obigen Beispiel, in dem die eine Spur 11a des Übertragungssignals eine Repräsentation von dPOS/dt ⊕ OFF und die andere Spur 11b eine Repräsentation von dPOS/dt ⊖ OFF enthält, kann durch die Verknüpfung (dPOS/dt ⊕ OFF) ⊕ (dPOS/dt e OFF) die Repräsentation des Offsetwertes OFF eliminiert werden, wenn die Verknüpfung ⊕, ⊖ miteinander kommutativ sind, was beispielsweise bei einer arithmetischen Verknüpfung der Fall ist. Auch hier können alternativ auch die zeitlich integrierten bzw. nicht differenzierten Werte verwendet werden.

Die Reihenfolge, in der die Verknüpfungen stattfinden, kann bei entsprechender Wahl der Verknüpfungen beliebig sein. Insbesondere können die verwendeten Verknüpfungen kommutativ sein.

Die Übertragung des Übertragungssignals 11 kann auch über Lichtwellenleiter erfolgen. Das Messsystem 16 wird dann über eine getrennte Versorgungsleitung mit Energie versorgt.

Bei der Verwendung einer Zweidrahtleitung als Verbindungsleitung zwischen der Vorrichtung 1 und der Vorrichtung 17 kann die Energieversorgung des Messsystems 16 über die Zweidrahtleitung erfolgen. Das Übertragungssignal 11 wird dann durch die Modulation des Versorgungsstroms oder der Versorgungsspannung realisiert. Die Modulation kann im Ausgabeorgan 15 vorgenommen und im Signaleingang 19 kann das Rechtecksignal durch Demodulation zurück gewonnen werden.

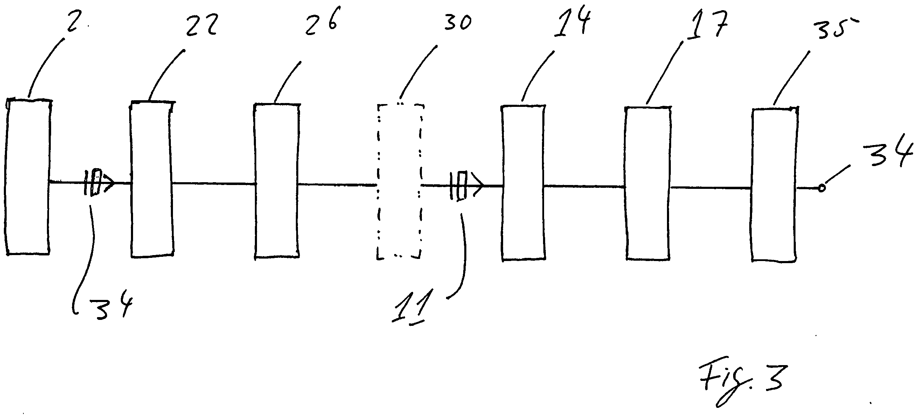

Fig. 3 zeigt ein weiteres Ausführungsbeispiel der Erfindung, wobei für Elemente, die in Funktion und/oder Aufbau den Elementen der Ausführungsbeispiele der Fig. 1 und 2 entsprechen, dieselben Bezugszeichen verwendet werden. Der Kürze halber wird lediglich auf die Unterschiede zu den Ausführungsbeispielen der bisherigen Figuren eingegangen.

Die Messeinrichtung 2 kann wie in den bisherigen Ausführungsbeispielen oder als ein Tachogenerator ausgestaltet sein. Ist die Messeinrichtung 2 ein Tachogenerator, so wird über die Signalstrecke 3 ein die Geschwindigkeit repräsentierendes Messsignal 8 an den A/D-Wandler 22 der Vorrichtung 1 übertragen, der das Messsignal 8 digitalisiert und an das Verknüpfungsorgan 26 ausgibt. Im Verknüpfungsorgan 26 wird das digitalisierte Spannungssignal 34 mit dem Offsetwert OFF verknüpft. Beispielsweise kann das digitalisierte Spannungssignal 34 im Verknüpfungsorgan 26 Frequenzen zugeordnet werden, die vom Messwert abhängen und denen der Offsetwert OFF in Form einer Offsetfrequenz z.B. hinzugefügt wird. Die Wandlung in die Frequenzen kann auch in dem optional dem Verknüpfungsorgan 26 nachgeschalteten Signalgenerator 30 erfolgen.

Das durch die Verknüpfung des digitalen Offsetwertes OFF mit dem digitalisierten Spannungssignal 34 erzeugte Übertragungssignal 11 wird über die Ausgangsschnittstelle 14 ausgegeben und an die Vorrichtung zum Auswerten 17 übertragen. In der Vorrichtung 17 wird das digitalisierte Spannungssignal 34 aus dem Übertragungssignal 11 gewonnen und an einen nachgeschalteten D/A-Wandler 35 ausgegeben. An einem Signalausgang des D/A-Wandlers 35 liegt das Messsignal wieder als Tachosignal, an.

In einer Weiterführung dieser Ausgestaltung kann die Funktion eines Tachogenerators durch einen digitalen Drehgeber, der einen Lagewert erfasst, emuliert werden. Hierzu wird in Fig. 3 als Messeinrichtung 2 wieder ein digitaler Inkremental- oder auch Absolutgeber eingesetzt. In der Vorrichtung 1 wird, wie in Fig. 1 und 2 dargestellt, das Übertragungssignal erzeugt und an die Vorrichtung 17 übertragen. Um das Tachosignal zu erhalten, weist die Vorrichtung 17 bei dieser Weiterführung lediglich einen zusätzlichen D/A-Wandler 35 auf, um aus dem Signal dPOS/dt, also der aus dem Lagewert gebildeten Geschwindigkeit, das Tachosignal wiederherzustellen. Diese Ausgestaltung bietet in Verbindung mit der oben beschriebenen Zweidrahtleitung den Vorteil, dass auch die Geschwindigkeit Null überwacht werden kann.

## Patentansprüche

1. Verfahren zur Bestimmung und/oder Übertragung eines momentan zu erfassenden positionsabhängigen Messwertes (POS), wie einer Lage, einer Geschwindigkeit oder einer Beschleunigung, bei dem aus einem den momentan zu erfassenden positionsabhängigen Messwert (POS) repräsentierenden positionsabhängigen Messsignal (8) ein Übertragungssignal (11) erzeugt wird, in dem der momentan zu erfassende positionsabhängige Messwert (POS) eindeutig rekonstruierbar und ein vorbestimmter, eine zeitliche Ableitung eines vom momentan zu erfassenden positionsabhängigen Messwert (POS) unabhängigen Messwertes repräsentierender Offsetwert (OFF) mit dem momentan zu erfassenden positionsabhängigen Messwert (POS) verknüpft übertragen werden.

2. Verfahren nach Anspruch 1, wobei die zeitliche Ableitung des momentan zu erfassenden positionsabhängigen Messwertes (POS) im positionsabhängigen Messsignal (8) durch eine erste Frequenz und im Übertragungssignal (11) durch eine zweite Frequenz, die höher als die erste Frequenz ist, und der Unterschied zwischen der ersten und der zweiten Frequenz durch den vorbestimmten Offsetwert (OFF) repräsentiert werden.

3. Verfahren nach einem der Ansprüche 1 oder 2, wobei eine weitere Spur des Übertragungssignals (11) den vorbestimmten Offsetwert (OFF) repräsentiert.

4. Verfahren nach einem der Ansprüche 1 bis 3, wobei das Übertragungssignal (11) wenigstens zwei Spuren (11a, 11b) enthält, in denen jeweils der momentan zu erfassende positionsabhängige Messwert (POS) und der vorbestimmte Offsetwert (OFF) miteinander verknüpft übertragen werden, und in der einen Spur (11a) der momentan zu erfassende positionsabhängige Messwert mit einer gegenüber der anderen Spur (11 b) umgekehrten Funktion mit dem vorbestimmten Offsetwert (OFF) verknüpft übertragen wird.

5. Verfahren nach einem der Ansprüche 1 bis 4, wobei aus dem positionsabhängigen Messsignal (8) eine weitere um 90° phasenverschobene Spur (11 b) erzeugt wird, und wobei beide Spuren (11 a, 11 b) mit dem Offsetwert (OFF) verknüpft übertragen werden.

6. Verfahren nach einem der Ansprüche 1 bis 5, wobei das Verfahren in einem Positionsmesssystem (16) ausgeführt wird, das das Positionssignal (8) intern erzeugt.

7. Verfahren zur Auswertung eines gemäß den Ansprüchen 1 bis 6 erzeugten Übertragungssignals (11), wobei der momentan zu erfassende Messwert (POS) aus dem Übertragungssignal (11) rekonstruiert wird, indem der zu erfassende Messwert (POS) vom vorbestimmten Offsetwert (OFF) getrennt wird.

8. Verfahren nach Anspruch 7, wobei der vorbestimmte Offsetwert (OFF) durch eine Verknüpfung einer Spur (11a) des Übertragungssignals (11) mit einer weiteren Spur (11b) des Übertragungssignals (11) eliminiert wird, wobei in den Spuren (11a, 11 b) der momentan zu erfassende Messwert (POS) und der vorbestimmte Offsetwert (OFF) mit jeweils zueinander umgekehrten Verknüpfungen enthalten sind.

9. Verfahren nach einem der Ansprüche 1 bis 8, wobei das Übertragungssignal (11) eine additive Verknüpfung des vorbestimmten Offsetwertes (OFF) und einer zeitlichen Ableitung des momentan zu ermittelnden Messwertes (POS) oder des Messwertes (POS) selbst repräsentiert.

10. Verfahren nach einem der Ansprüche 1 bis 9, wobei das Übertragungssignal (11) in Form eines Rechtecksignals ausgegeben wird.

11. Verfahren nach einem der Ansprüche 1 bis 10, wobei die Frequenz des Übertragungssignals (11) abhängig von der zeitlichen Ableitung des momentan zu erfassenden Messwertes (POS) ist.

12. Verfahren nach einem der Ansprüche 1 bis 11, wobei der Messwert (POS) und der Offsetwert (OFF) digital miteinander verknüpft werden.

13. Verfahren nach einem der Ansprüche 1 bis 12, wobei die Funktion des Messsystems (16) mit Hilfe des Übertragungssignals (11) überwacht wird.

14. Verfahren nach einem der Ansprüche 1 bis 13, wobei das Übertragungssignal (11) aus einem absoluten Messwert (POS) erzeugt wird, indem dem absoluten Messwert (POS) über eine vorbestimmte Verknüpfung eine Frequenz des Übertragungssignals (11) zugewiesen wird.

15. Vorrichtung (1, 16) zur Bestimmung und/oder Übertragung eines momentan zu erfassenden positionsabhängigen Messwertes (POS), wie einer Lage, einer Geschwindigkeit oder einer Beschleunigung, insbesondere zur Durchführung des Verfahrens nach einem der Ansprüche 1 bis 6, mit einem Rechenmodul (12), das eine Eingangsschnittstelle (13) und eine Ausgangsschnittstelle (14) aufweist, und mit einem mit der Ausgangsschnittstelle (14) signalübertragend verbundenen Ausgabeorgan (15), durch das im Betrieb wenigstens ein an der Ausgangsschnittstelle (14) anliegendes Übertragungssignal (11) nach außerhalb der Vorrichtung (1, 16) ausgebbar ist, wobei im Betrieb an der Eingangsschnittstelle (13) ein momentan zu erfassender positionsabhängiger Messwert (POS) als positionsabhängiges Messsignal (8) anlegbar und an der Ausgangsschnittstelle (14) der momentan zu erfassende positionsabhängige Messwert (POS) eindeutig rekonstruierbar mit einem vorbestimmten, eine zeitliche Ableitung eines vom momentan zu erfassenden positionsabhängigen Messwert (POS) unabhängigen Messwertes repräsentierenden Offsetwert (OFF) verknüpft ist.

16. Vorrichtung (1, 16) nach Anspruch 15, wobei das Übertragungssignal (11) wenigstens zwei Spuren (11 a, 11 b) mit jeweils einer Verknüpfung des momentan zu erfassenden Messwertes (POS) und des vorbestimmten Offsetwertes (OFF) enthält und die Verknüpfung der einen Spur (11a) eine Umkehrung der Verknüpfung der anderen Spur (11b) ist.

17. Vorrichtung (1, 16) nach Anspruch 15 oder 16, wobei die Vorrichtung (1, 16) mit nicht mehr als zwei Anschlüssen betreibbar ausgestaltet ist und an den nicht mehr als zwei Anschlüsse sowohl die Vorrichtung (1, 16) mit Versorgungsenergie versorgbar als auch das Übertragungssignal (11) anlegbar ist.

18. Vorrichtung (1, 16) nach einem der Ansprüche 15 bis 17, wobei die Vorrichtung (1, 16) wenigstens einen Anschluss für einen Lichtwellenleiter aufweist, an dem das Übertragungssignal (11) anlegbar ist.

19. Messsystem (16) mit einer Messeinrichtung (2), durch die das Messsignal (8) in Abhängigkeit von der Relativbewegung zweier zueinander bewegter Körper erzeugbar ist, wobei in dem Messsystem eine Vorrichtung (1, 16) nach einem der Ansprüche 15 bis 18 integriert ist.

20. Vorrichtung (17) zur Auswertung eines gemäß einem der Ansprüche 1 bis 14 erzeugten Übertragungssignals (11), mit einem Auswertemodul (18), das einen Signaleingang (19) und einen Signalausgang (20) aufweist, wobei im Betrieb am Signaleingang (19) ein Übertragungssignal (11), in dem ein momentan zu erfassender Messwert (POS) eindeutig rekonstruierbar mit einem vorbestimmten, eine zeitliche Ableitung eines vom momentan zu erfassenden Messwert (POS) unabhängigen Messwertes repräsentierenden Offsetwert (OFF) verknüpft ist, anlegbar und am Signalausgang (20) der momentan zu erfassende Messwert (POS) vom vorbestimmten Offsetwert (OFF) getrennt ausgebbar ist.

## Claims

1. Procedure for determining and/or transmitting a currently to be recorded position-dependent measured value (POS), such as a position, a speed or an acceleration, in which, from a position-dependent measuring signal (8) representing the currently to be recorded position-dependent measured value (POS) a transmission signal (11) is generated, in which the currently to be recorded position-dependent measured value (POS) can be unequivocally reconstructibly transmitted and a predetermined offset value (OFF) representing a chronological derivation of a measured value independent of the position-dependent measured value (POS) currently to be recorded are transmitted in such a way that they are linked to the position-dependent measured value (POS) currently to be recorded.

2. Procedure in accordance with Claim 1, whereby the chronological derivation of the position-dependent measured value (POS) currently to be recorded is represented in the position-dependent measuring signal (8) by a first frequency and in the transmission signal (11) by a second frequency which is higher than the first frequency, and that the difference between the first and the second frequencies is represented by the predetermined offset value (OFF).

3. Procedure in accordance with one of Claims 1 or 2, whereby a further track of the transmission signal (11) represents the predetermined offset value (OFF).

4. Procedure in accordance with one of the Claims 1 to 3, whereby the transmission signal (11) contains at least two tracks (11a, 11b) in which each of the position-dependent measured values (POS) currently to be recorded and the predetermined offset values (OFF) are transmitted in such a way that they are linked to each other, and in the one track (11a) the currently to be recorded position-dependent measured value is transmitted in such a way that it is linked to the predetermined offset value (OFF), with a function inverse to that of the other track (11b).

5. Procedure in accordance with one of the Claims 1 to 4, whereby a further track (11b) out of phase by 90° is generated from the position-dependent measuring signal (8), and whereby both tracks (11a, 11b) are transmitted in such a way that they are linked to the offset value (OFF).

6. Procedure in accordance with one of the Claims 1 to 5, whereby the procedure is effected in a position measuring system (16) which the position signal (8) generates internally.

7. Procedure to evaluate a transmission signal (11) generated in accordance with Claims 1-6, whereby the measured value (POS) currently to be recorded is reconstructed from the transmission signal (11) in that the measured value to be recorded (POS) is separated from the predetermined offset value (OFF).

8. Procedure in accordance with Claim 7, whereby the predetermined offset value (OFF) is eliminated by a link between one track (11a) of the transmission signal (11) and a further track (11b) of the transmission signal (11), whereby the tracks (11a, 11b) contain the measured value (POS) currently to be recorded and the predetermined offset value (OFF) with links which are respectively inverse to each other.

9. Procedure in accordance with one of the Claims 1 to 8, whereby the transmission signal (11) represents an additive link between the predetermined offset value (OFF) and a chronological derivation of the measured value (POS) currently to be determined or of the measured value (POS) itself.

10. Procedure in accordance with one of the Claims 1 to 9, whereby the transmission signal (11) is output in the form of a square wave signal.

11. Procedure in accordance with one of the Claims 1 to 10, whereby the frequency of the transmission signal (11) is dependent on the chronological derivation of the measured value (POS) currently to be recorded.

12. Procedure in accordance with one of the Claims 1 to 11, whereby the measured value (POS) and the offset value (OFF) are digitally linked with each other.

13. Procedure in accordance with one of the Claims 1 to 12, whereby the function of the measuring system (16) is monitored with the help of the transmission signal (11).

14. Procedure in accordance with one of the Claims 1 to 13, whereby the transmission signal (11) is generated from an absolute measured value (POS) in that the absolute measured value (POS) is assigned a frequency of the transmission signal (11) via a predetermined link.

15. Device (1, 16) for determining and/or transmitting a position-dependent measured value (POS) currently to be recorded, such as a position, a speed or an acceleration, in particular to implement the procedure in accordance with one of the Claims 1 to 6, with a computer module (12) which has an input interface (13) and an output interface (14) and which with an output organ (15) which is connected to the output interface (14) in such a way as to transmit signals and through which during operation at least one transmission signal (11) applied to the output interface (14) can be output outside the device (1, 16), whereby during operation a position-dependent measured value (POS) currently to be recorded can be applied to the input interface (13) as a position-dependent measuring signal (8) and, at the output interface (14), the position-dependent measured value (POS) currently to be recorded is unequivocally reconstructibly linked to a predetermined offset value (OFF) representing a chronological derivation of a measured value independent of the position-dependent measured value (POS) currently to be recorded.

16. Device (1, 16) in accordance with Claim 15, whereby the transmission signal (11) contains at least two tracks (11a, 11b) each with a link to the measured value (POS) currently to be recorded and to the predetermined offset value (OFF) and whereby the link to one track (11a) is an inversion of the link to the other track (11b).

17. Device (1, 16) in accordance with Claim 15 or 16, whereby the device (1, 16) is designed so that it cannot be operated with more than two connections and, through these no more than two connections, the device (1, 16) can be supplied with energy and the transmission signal (11) can be applied.

18. Device (1, 16) in accordance with one of the Claims 15 to 17, whereby the device (1, 16) has at least one connection for an optical fiber cable to which the transmission signal (11) can be applied.

19. Measuring system (16) with a measuring device (2) through which the measuring signal (8) can be generated depending on the relative movement of two bodies moving towards each other, whereby a device (1, 16) in accordance with one of the Claims 15 to 18 is integrated in the measuring system.

20. Device (17) for evaluating a transmission signal (11) generated in accordance with one of the Claims 1 to 14, with an evaluation module (18) which has a signal input (19) and a signal output (20), whereby during operation a transmission signal (11) in which a measured value (POS) currently to be recorded is unequivocally reconstructibly linked to a predetermined offset value (OFF) representing a chronological derivation of a measured value independent of the measured value (POS) currently to be recorded can be applied to the signal input (19), and the measured value (POS) currently to be recorded can be output separately from the predetermined offset value (OFF) at the signal output (20).

## Revendications

1. Procédé permettant de déterminer et/ou de transmettre une valeur de mesure dépendant de la position à détecter actuellement(POS), telle qu'une position, une vitesse ou une accélération, dans lequel à partir d'un signal de mesure (8) dépendant de la position représentant la valeur de mesure dépendant de la position à détecter actuellement (POS) un signal de transmission (11) est généré, dans lequel la valeur de mesure dépendant de la position à détecter actuellement (POS) est transmise de manière nettement reconstructible et une valeur de décalage (OFF) prédéterminée représentant une dérivée par rapport au temps d'une valeur de mesure indépendante de la valeur de mesure dépendant de la position à détecter actuellement (POS) est transmise en étant combinée à la valeur de mesure dépendant de la position à détecter actuellement (POS).

2. Procédé selon la revendication 1, dans lequel la dérivée par rapport au temps de la valeur de mesure dépendant de la position à détecter actuellement (POS) est représentée dans le signal de mesure dépendant de la position (8) par une première fréquence et dans le signal de transmission (11) par une seconde fréquence qui est supérieure à la première fréquence et la différence entre la première et la seconde fréquence est représentée par la valeur de décalage prédéterminée (OFF).

3. Procédé selon l'une des revendications 1 ou 2, dans lequel une autre piste du signal de transmission (11) représente la valeur de décalage prédéterminée (OFF).

4. Procédé selon l'une des revendications 1 à 3, dans lequel le signal de transmission (11) contient au moins deux pistes (11a, 11b), dans lesquelles la valeur de mesure dépendant de la position à détecter actuellement (POS) et la valeur de décalage prédéterminée (OFF) sont transmises en étant combinées l'une à l'autre, et dans l'une des pistes (11a) la valeur de mesure dépendant de la position à détecter actuellement avec une fonction inversée par rapport à l'autre piste (11b) est transmise en étant combinée à la valeur de décalage prédéterminée (OFF).

5. Procédé selon l'une des revendications 1 à 4, dans lequel une autre piste (11b) à phases alternées de 90° est générée à partir d'un signal de mesure dépendant de la position (8) et dans lequel les deux pistes (11a, 11b) sont transmises en étant combinées à la valeur de décalage (OFF).

6. Procédé selon l'une des revendications 1 à 5, dans lequel le procédé est effectué dans un système de mesure de position (16) qui génère en interne le signal de position (8).

7. Procédé permettant d'évaluer un signal de transmission (11) généré selon les revendications 1 à 6, dans lequel la valeur de mesure à détecter actuellement (POS) est reconstruite à partir du signal de transmission (11), la valeur de mesure à détecter (POS) étant séparée de la valeur de décalage prédéterminée (OFF).

8. Procédé selon la revendication 7, dans lequel la valeur de décalage prédéterminée (OFF) est éliminée par une combinaison d'une piste (11a) du signal de transmission (11) à une autre piste (11b) du signal de transmission (11), les pistes (11a, 11b) contenant la valeur de mesure à détecter actuellement (POS) et la valeur de décalage prédéterminée (OFF) avec des combinaisons inversées l'une par rapport à l'autre.

9. Procédé selon l'une des revendications 1 à 8, dans lequel le signal de transmission (11) représente une combinaison additive de la valeur de décalage prédéterminée (OFF) et d'une dérivée par rapport au temps de la valeur de mesure à déterminer actuellement (POS) ou de la valeur de mesure (POS) elle-même.

10. Procédé selon l'une des revendications 1 à 9, dans lequel le signal de transmission (11) est émis sous la forme d'un signal carré.

11. Procédé selon l'une des revendications 1 à 10, dans lequel la fréquence du signal de transmission (11) dépend de la dérivée par rapport au temps de la valeur de mesure à détecter actuellement (POS).

12. Procédé selon l'une des revendications 1 à 11, dans lequel la valeur de mesure (POS) et la valeur de décalage (OFF) sont combinées l'une à l'autre de manière numérique.

13. Procédé selon l'une des revendications 1 à 12, dans lequel le fonctionnement du système de mesure (16) est contrôlé à l'aide du signal de transmission (11).

14. Procédé selon l'une des revendications 1 à 13, dans lequel le signal de transmission (11) est généré à partir d'une valeur de mesure absolue (POS), dans laquelle une fréquence du signal de transmission (11) est attribuée à la valeur de mesure absolue (POS) par le biais d'une combinaison prédéterminée.

15. Dispositif (1, 16) permettant de déterminer et/ou de transmettre une valeur de mesure dépendant de la position à détecter actuellement(POS), telle qu'une position, une vitesse ou une accélération, permettant en particulier d'exécuter le procédé selon l'une des revendications 1 à 6, avec un module de calcul (12) qui présente une interface d'entrée (13) et une interface de sortie (14), et avec un organe d'émission (15) lié pour la transmission de signaux à l'interface de sortie (14) par le biais duquel en fonctionnement au moins un signal de transmission (11) situé de manière adjacente à l'interface de sortie (14) peut être émis vers l'extérieur du dispositif (1, 16), en fonctionnement une valeur de mesure dépendant de la position à détecter actuellement (POS) pouvant être placée sur l'interface d'entrée (13) comme signal de mesure dépendant de la position (8) et sur l'interface de sortie (14) la valeur de mesure dépendant de la position à détecter actuellement (POS) étant combinée de manière nettement reconstructible à une valeur de décalage (OFF) prédéterminée représentant une dérivée par rapport au temps d'une valeur de mesure indépendante de la valeur de mesure dépendant de la position à détecter actuellement (POS).

16. Dispositif (1, 16) selon la revendication 15, dans lequel le signal de transmission (11) contient au moins deux pistes (11a, 11b) présentant chacune une combinaison de la valeur de mesure à détecter actuellement (POS) et de la valeur de décalage prédéterminée (OFF) et la combinaison de l'une des pistes (11a) étant l'inversion de la combinaison de l'autre piste (11b).

17. Dispositif (1, 16) selon la revendication 15 ou 16, dans lequel le dispositif (1, 16) est conçu pour fonctionner avec pas plus de deux raccordements et le dispositif (1, 16) peut être alimenté en énergie d'alimentation et le signal de transmission (11) peut être placé sur les pas plus de deux raccordements.

18. Dispositif (1, 16) selon l'une des revendications 15 à 17, dans lequel le dispositif (1, 16) présente au moins un raccordement pour une fibre optique, sur laquelle peut être mis le signal de transmission (11).

19. Système de mesure (16) doté d'un agencement de mesure (2), par le biais duquel le signal de mesure (8) peut être généré en fonction du déplacement relatif de deux corps déplacés l'un par rapport à l'autre, un dispositif (1, 16) selon l'une des revendications 15 à 18 étant intégré dans le système de mesure.

20. Dispositif (17) permettant d'évaluer un signal de transmission (11) généré selon l'une des revendications 1 à 14, doté d'un module d'évaluation (18) qui présente une entrée de signal (19) et une sortie de signal (20), en fonctionnement un signal de transmission (11) pouvant être mis sur l'entrée de signal (19), dans ledit signal de transmission une valeur de mesure à détecter actuellement (POS) étant combinée de manière nettement reconstructible à une valeur de décalage (OFF) prédéterminée représentant une dérivée par rapport au temps d'une valeur de mesure indépendante de la valeur de mesure à détecter actuellement (POS) et sur la sortie de signal (20) la valeur de mesure à détecter actuellement (POS) pouvant être émise séparément de la valeur de décalage prédéterminée (OFF).
